Europäisches Patentamt

European Patent Office

Office européen des brevets

(19)

(11) Publication number: **0 266 819 B1**

# EUROPEAN PATENT SPECIFICATION

(45) Date of publication of patent specification: **26.06.91**  (51) Int. Cl.⁵: **H04N 5/335**

(21) Application number: **87201960.9**

(22) Date of filing: **12.10.87**

(54) **Image pickup device.**

(30) Priority: **17.10.86 NL 8602617**

(43) Date of publication of application:
**11.05.88 Bulletin 88/19**

(45) Publication of the grant of the patent:
**26.06.91 Bulletin 91/26**

(84) Designated Contracting States:
**BE DE FR GB IT NL**

(56) References cited:
**US-A- 4 301 471**
**US-A- 4 383 327**
**US-A- 4 409 483**

(73) Proprietor: **B.V. Optische Industrie "De Oude Delft"**
**Van Miereveltlaan 9**
**NL-2612 XE Delft(NL)**

(72) Inventor: **Mulder, Hendrik**
**Hendrik Marsmanlaan 7**
**NL-2624 TJ Delft(NL)**

(74) Representative: **van der Burg, Louis**
**Van Miereveltlaan 9**
**NL-2612 XE Delft(NL)**

EP 0 266 819 B1

## Description

The invention relates to an image pickup device comprising a matrix having horizontal rows and vertical columns of image pickup elements, and means for supplying clook signals to the matrix of image pickup elements.

In radiography the directing of a flat fan-shaped beam of x-ray radiation via a body under examination to an image pickup device consisting of a large number of image pickup elements situated in a line is known from the US Patent US-A- 4,179,100 published on 18.12.1979. In this case each image pickup element receives, optionally after further processing, the radiation which has been transmitted through a corresponding part of the body under examination. As further processing it is possible for the radiation to be converted into visible light in an x-ray detector, for example, before it is picked up by the image pickup device. In the case of an image pickup device consisting of a large number of image pickup elements situated in a line and having, for example, dimensions of 0.1 × 0.1 mm, the exposure time for each image pickup element is extremely short for the usual scanning speeds of a body under examination. As a result, the signal/noise ratio of the image obtained is very poor or the source loading has to be raised to undesirably high levels to achieve a better signal/noise ratio. In order, nevertheless, to obtain an acceptable signal/noise ratio for a relatively low source loading, it is necessary to use the x-ray source more effeciently than is possible with a fan-shaped beam which has only a thickness of the size of one image pickup element.

Making use of an image pickup device comprising a matrix having rows and columns of image pickup elements, the charge of which is formed during a certain period in a certain pickup element as a result of the radiation received by said element during said period, being transferred during a reading period to an adjacent associated vertical shift register, is known from the US Patent US-A- 4,383,327. This takes place during the reading period for all the image pickup elements in each row. A relative movement between the body and the image pickup device is also brought about between the consecutive periods so that the same part of the body under examination is imaged on the next row of image pickup elements during the subsequent period. It is also possible in a manner known per se to combine the function of converting radiation into charge and the function of transferring charge in a vertical CCD shift register. The charge in the shift register tracks so that in this manner, during consecutive periods, a charge is accumulated by consecutive image pickup elements in a column in the associated shift register. The accumulated charge is the sum of the charge which is transmitted through a specific part (an image point) of the body under examination during the consecutive periods. At one end of the columns a horizontal shift register may be provided for reading out successively and delivering the information in sequence from the adjacent columns to an output terminal. The information in that case therefore always represents the summed information from all the image pickup elements in each of said columns for an image point.

This method of scanning is termed TDI (time delay and integration) and appears to be particularly well suited for use in the examination of bodies by means of x-ray radiation, it being possible for a usable image to be formed in spite of the fact that each image pickup element per se generates only a very small quantity of charge in response to the radiation received. For a comprehensive discussion of the TDI principle, reference is made to the US Patent US-A-4,383,327 published on 10.05.1983.

The object of the invention is to provide a possibility for simplifying the A/D converter connected to the output terminal of an image pickup device and the digital electronic circuits subsequent thereto by reducing the number of bits required for converting the signals delivered by the columns into digital form.

The invention is based on the perception that in x-ray images of, for example, the human body, the image points at which a maximum quantity of x-ray radiation is transmitted by the body will in general be situated at some distance, i.e. at a distance of a few image pickup elements, from image points with a minimum quantity of transmitted x-ray radiation. This phenomenon is the stronger, the smaller the image points, i.e. the image pickup elements are, the less sharp the focusing of the x-ray source is and the poorer the MTF (modulation transfer function).

If now, instead of shifting the signal from each image pickup element directly to an output register, a signal is delivered to the output register which is a measure of the difference in signals pertaining to adjacent image pickup elements, a data reduction of a few bits in the output signal of the A/D converter can be achieved, which makes the use of a simpler, and consequently cheaper, A/D converter possible and as a result of this the digital electronic circuits following said A/D converter can also be of simpler construction.

In the known TDI image pickup devices in which the image information per image point is read out at the end of the columns, a correction is regularly necessary for the dark charge, i.e. the charge generated by an unexposed image pickup element because said dark charge is temperature dependent. The image pickup device according to the invention has the additional advantage that automatic dark-charge correction takes place because, as a consequence of determining the difference between the charges which are representative of two adjacent image points, the dark-charge component is eliminated in the difference signal.

The object of the invention is therefore to provide an image pickup device of the above-described type which delivers an output signal, the information in which can be reproduced in digital form in fewer bits than in the known image pickup device without a noticeable loss of information and consequently a noticeable display of poorer image quality resulting and which, in addition, provides an automatic dark-current correction.

For this purpose the invention provides an image pickup device of the above described type provided with means for the column-wise determination of a signal which is representative of the difference between the image information of one particular image point which is imaged on the image pickup elements of a column and the image information of the subsequent image point in said column.

Although the invention is particularly suitable for use in radiography where the images obtained are scanned by means of the TDI principle, the invention can also be used in the case where a matrix of image pickup elements is exposed simultaneously in its entirety with a 2-dimensional radiation pattern, after which the charge of the consecutive image pickup elements in each column are transferred row by row to a readout register. The invention can also be used in a matrix consisting of only one row of image pickup elements, in which, for each image point, only the difference is determined between the image information which is received during a particular exposure period by a particular pickup element in the row and the image information which is received by the same pickup element during the exposure period subsequent thereto.

The invention will be explained below in more detail on the basis of exemplary embodiments with reference to the drawing. In this:

Figure 1 shows a diagrammatic plan view of an image pickup device according to the invention;

Figure 2a shows a cross-section along the line II-II in Figure 1;

Figure 2b shows the surface potential profile that pertains to Figure 2a;

Figure 3 shows an example of a buffer circuit which can be used in the circuit according g to Figure 2;

Figure 4a shows a cross-section of a configuration which is suitable for converting a voltage difference into a charge difference with an indication of polarity;

Figure 4b shows the surface charge profile that pertains to the circuit according to Figure 4a in a first situation;

Figure 4c shows the surface charge profile that pertains to the circuit according to Figure 4a in a second situation;

Figure 5a shows a diagrammatic reproduction of a circuit for use in a second embodiment according to the invention;

Figure 5b shows a diagrammatic reproduction of the surface charge profile which may arise during the operation of the circuit according to Figure 5a;

Figure 5c shows a reproduction of the form of the output voltage during the operation of the circuit according to Figure 5a; and

Figure 6 shows a diagrammatic reproduction of the use of the circuit according to Figure 5 for scanning a number of columns of an image pickup device.

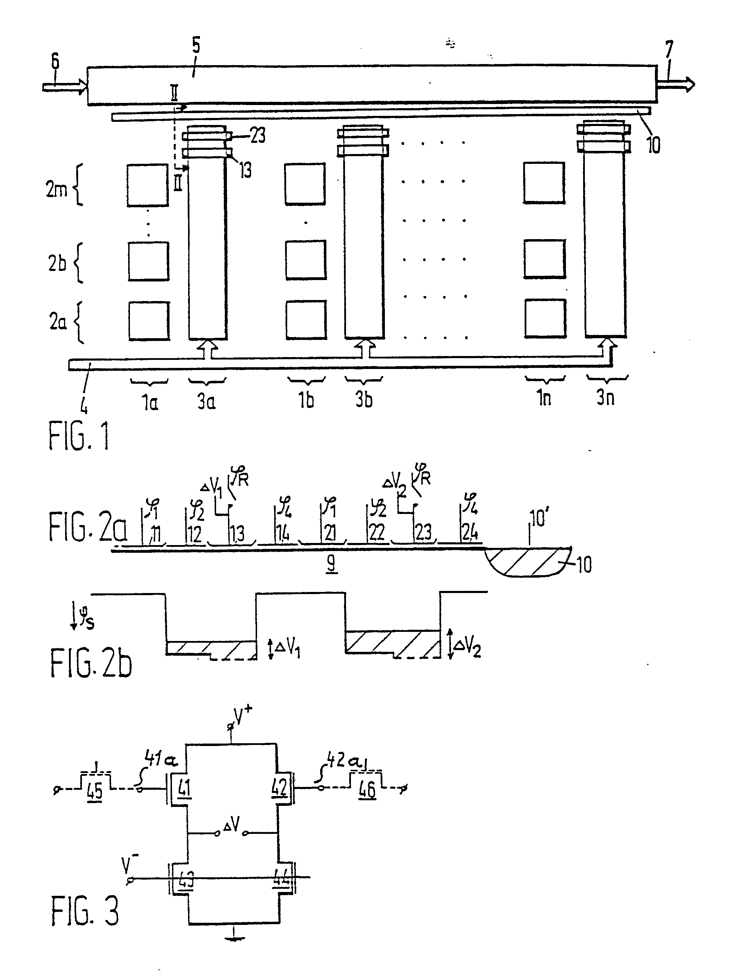

Figure 1 shows diagrammatically the structure of an image pickup device, which is designed to operate on the TDI principle, on a semiconductor substrate 9. The device comprises m rows, 2a-2m respectively, of image pickup elements and n columns, 1a-1n respectively, of image pickup elements. The image pickup device therefore consists of m x n image pickup elements. Each of the m image pickup elements of a particular column can be coupled under the control of a readout gate electrode to a vertical CCD shift register pertaining to said column, 3a-3n respectively. Clock signals are supplied via a bus 4 to said shift registers 3a-3n and to the readout gate electrodes in a manner known per se. In the mth row, the shift registers of each column are connected to a horizontal shift register 5 which can also receive clock signals via a bus 6. The output signal from the horizontal shift register 5 can be taken off at an output terminal 7, which signal can then be processed further. For the manner in which the charge from the individual image pickup elements, which charge corresponds to radiation received during a particular period, is transferred to the adjacent vertical shifts registers and from there transferred to the horizontal shift register making use of the TDI principle, reference is made to the US Patent US-A-4,383,327.

Attention is drawn to the fact that it is also possible in a manner known per se to design the image pickup device according to Figure 1 in a manner such that the function of converting light into charge and the function of transferring the charge formed in the column direction are combined. In that case, the columns 1a-1n respectively are consequently combined with the columns 3a-3n to form one single column in each case.

According to a first embodiment of the invention, in each vertical CCD shift register 3a-3n at the end near the horizontal shift register 5, two CCD elements (not shown) 3a, m + 1 and 3a, m + 2, ..., 3n, m + 1 and 3n, m + 2 with a floating gate electrode, as indicated by the reference numerals 13 and 23 in column 3a are provided. Figure 2 shows a section along the line II-II in Figure 1 and, consequently, a transverse view of the CCD elements 3a, m + 1 and 3a, m + 2. In the exemplary embodiment shown it has been assumed that the CCD elements are provided in a manner known per se with a triggering in four phases, although this is not essential for the principle of the invention. The gate electrodes 11, 12 and 14 of the CCD element 3a, m + 1 and 21, 22 and 24 of the CCD element 3a, m + 2 receive respectively the control voltages $\phi 1$, $\phi 2$ and $\phi 4$.

The gate electrodes 13 and 23 of the respective CCD elements form the floating gate electrodes. During the control cycle of the CCD element, at the instant when the charge to be transferred is located beneath respectively the gate electrodes 11, 12 and 21, 22, there is applied to said gate electrodes 13 and 23 a reset voltage $\phi_r$ which is so large that potential wells are formed beneath the gate electrodes 13 and 23 respectively which are equally deep or somewhat deeper than the potential wells which form beneath the other gate electrodes when the control voltage ($\phi_1$, $\phi_2$, $\phi_4$) thereof has a high level. Immediately after said potential wells have been formed, the reset voltage is removed again from the gate electrodes $_{13}$ and 23 so that said gates are floating. If therefore the control voltage for the gates 11 and 21 respectively is then brought in a known manner to the low level, the charge which is representative of the image information of the two adjacent image points i and i + 1 of the object irradiated by means of the x-ray radiation, will distribute itself over the potential wells under, respectively, the gate electrodes 12, 13 and 22, 23 after this information from each of the image points has been summed by the Tdl principle across the whole of column 3a. Because a charge is located beneath, respectively, the gate electrodes 13 and 23, the voltage at the locating connecting terminals of said gate electrodes will adjust itself to a value which is determined by the formula for a flat plate capacitor, i.e. V = Q/C, wherein Q is the quantity of charge beneath a floating gate electrode and C is the capacity between the electrode and the underlying CCD element. The voltage on the gate electrodes 13 and 23 respectively is therefore representative of the quantity of charge beneath the electrodes and therefore of the image information which is represented by said charge.

Figure 2b indicates diagrammatically the charge collected beneath, respectively, the gate electrodes 12, 13 and 22, 23 and the associated profile of the surface potential $\phi_s$. The charge beneath the electrodes 12 and 13 results in a voltage change $\Delta V_1$ at the connecting terminal of the gate electrode 13 and the charge beneath the electrodes 22 and 23 results in a voltage $\Delta V_2$ at the connecting terminal of the gate electrode 23. As has been explained above, the difference between the charges beneath, respectively, the electrodes 12, 13 and 22, 23 is proportional to $\Delta V = \Delta V_1 - \Delta V_2$.

Preferably, the level of the reset potential $\phi_r$ for the gate electrodes 13 and 23 is slightly higher than the high level of the control voltage for the other gate electrodes. As a result of this the potential well beneath the floating gate electrodes 13 and 23 is always somewhat deeper than the potential wells beneath the other gate electrodes, which ensures that for small quantities of charge, i.e. a small quantity of image information, all the charge will flow under the floating gate electrode so that a measureable $\Delta V$ is present at the connecting terminals of said gate electrodes.

The voltage difference $\Delta V$ between the gate electrodes 13 and 23 can be readout by means of a buffer circuit which does not impose an electrical load on said electrodes. Figure 3 shows diagrammatically an exemplary embodiment of such a circuit consisting of four MOSFETs, of which the top two in the figure, 41 and 42 respectively, are connected as source follower and the bottom two, 43 and 44 respectively, as current source. At the gates 41a and 42a of the MOSFETs 41 and 42 respectively, the voltages are applied to the connecting terminals of the electrodes 13 and 23. The drains of the two MOSFETs 41 and 42 are connected to each other and to a positive supply voltage $V^+$. The sources of the two MOSFETs 43 and 44 are connected to each other and to earth potential, while the gates of the two MOSFETs 43 and 44 are connected to each other and to the negative supply voltage $V^-$. The voltage $\Delta V$, which is a measure of the difference between the voltages at the output terminals of the gate electrodes 13 and 23 and, consequently, of the difference between the charge produced in the CCD shift register due to adjacent image points can be taken off between the sources of the MOSFETs 41 and 42.

It is possible to read out a number of the n columns by means of a single buffer device according to Figure 3. For this purpose use can be made of the MOSFETs 45, 46 shown in broken lines in Figure 3 which serve as switches, each column always being provided with two such switches for the floating gate electrodes pertaining to the column. As a result of applying suitable control voltages to the gates of said MOSFETs, only one single pair pertaining to a particular column can be converted in each case to the conducting state in order to convert the voltages of the associated floating gate electrodes by means of the buffer circuits into a $\Delta V$ to be processed further. The control of the gate electrodes of the pairs of MOSFETs acting as a switch may, for example, take place by means of the horizontal shift register 5.

After a $\Delta V$ has been determined in the manner described above for the top two CCD elements of column 3a, the control voltages for, respectively, the gate electrodes 11 to 14 incl. and 21 to 24 incl. can be clocked in a known manner in order to remove the charge beneath the electrodes 22 and 23 to a diffusion channel 10 shown in Figures 1 and 2a and in order to transfer the charge beneath the electrodes 12 and 13 to beneath the electrodes 22 and 23. Then beneath the electrodes 12 and 13 the charge collects which is representative of the image information of an image point $i+2$ which follows the image point $i+1$ in the column direction and the charge which is representative of said image point is now located beneath the electrodes 22 and 23.

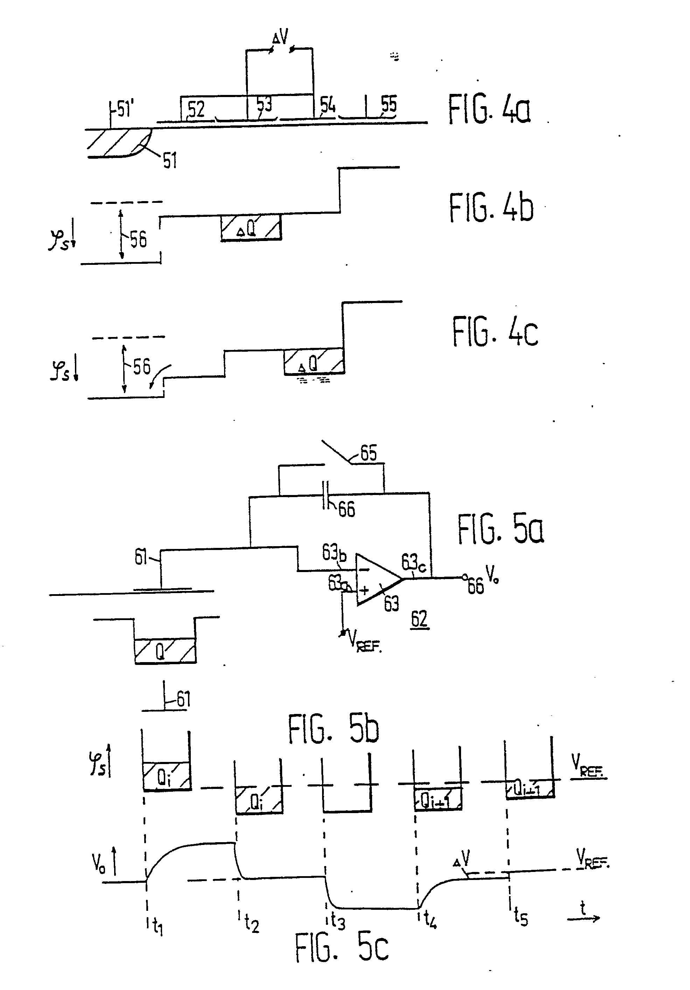

The $\Delta V$ determined by the buffer circuit according to Figure 3 can again be converted into an equivalent charge, which charge can then be read out again by the horizontal shift register 5 and be transferred to the output bus 7. A configuration suitable for this purpose is shown in cross section in Figure 4a. Said configuration comprises an injection diffusion channel 51 in the semi-conductur substrate 9 and four electrodes 52 to 55 incl. The electrodes 52 and 54 are connected to each other and the electrode 55 is connected to a fixed potential. The electrodes 52 and 54, on the one hand, and the electrode 53, on the other hand, again form floating gate electrodes, to which the voltage $\Delta V$ is fed as reset voltage. After the voltage $\Delta V$ has been applied between the floating gate electrodes 52, 54 and 53, a voltage difference $\Delta V = V_{53} - V_{52,54}$ is present, which voltage, in the event that the voltage $V_{53}$ is greater than $V_{52,54}$ results in the surface potential profile $\phi_s$ shown in Figure 4b. If $V_{52,54}$ is larger than $V_{53}$, the surface potential profile $\phi_s$ shown in Figure 4c is produced. In the potential profiles according to Figure 4b and 4c, the potential well beneath, respectively, gate electrode 53 or 54 can be filled by means of the so-called fill and spill method, with a quantity of charge $\Delta Q$ which is proportional to $\Delta V$. For this purpose, as shown in Figures 4b and 4c by the arrow 56, the potential which is applied to the connecting terminal 51' of the injection diffusion channel is lowered to such an extent that the charge can spread out of said channel underneath the electrodes 52, 53 and 54. By then increasing the potential of channel 51 again, all the charge again flows beneath the electrodes 52, 53 and 54 back to channel 51, except for the quantity of charge $\Delta Q$ in the potential well beneath, respectively, electrode 53 or 54.

The charges $\Delta Q$ according to, respectively, Figures 4b and 4c can be transferred in a known manner perpendicular to the plane of the drawing by CCD techniques by means of clock pulses to different destinations, the one destination receiving the charge $\Delta Q$ if $V_{53} > V_{52,54}$ and the other receiving the charge $\Delta Q$ if $V_{53} < V_{52,54}$. The two destinations may be located in two horizontal channels, but also in one single CCD channel with separate locations for positive and negative charge packages $\Delta Q$.

An advantage of this technique is that the readout register is not restricted to a particular location in the integrated circuit which contains the image pickup device and that the charge packages may, if desired, be provided with a scale factor.

The voltages $\Delta V$ obtained by means of the buffer circuit according to Figure 3 may, of course, also be read out directly, possibly by means of multiplex techniques. The manner in which all this should be achieved will be clear to those skilled in the art and therefore requires no explanation.

Figure 5 shows another embodiment for determining a voltage $\Delta V$ by means of the image pickup device according to the invention, only one single floating gate electrode 61 being provided at the top of each TDI column 3a-3n in Figure 1. Connected to the connecting terminal of said gate electrode is a diagrammatically shown charge scanning amplifier 62, which amplifier comprises an operational amplifier 63, the non-inverting input terminal 63a of which is connected to a reference voltage $V_{ref}$, the inverting input terminal 63b of which is connected to the floating gate electrode 61 and the output terminal 63c of which is fed back via a capacitor 64 to the inverting input 63b. The capacitor 64 can be short-circuited by means of a switch 65.

The operation of the circuit according to Figure 5a is explained in Figures 5b and 5c, Figure 5b showing diagrammatically the surface potential profile $\phi_s$ under the floating gate electrode 61 and Figure 5c the output voltage at terminal 66 of the amplifier 62. The time is shown along the horizontal axis in Figure 5b and 5c.

At the time instant $t_1$ in Figures 5b, there is located beneath the gate electrode 61 a charge $Q_i$ which is representative of the image information from an image point $i$ of a body to be irradiated collected by means of the TDI column and the switch 65 is in this case opened.

At the time instant $t_2$, switch 65 is closed by a clock pulse, as a result of which the gate electrode 61 is connected to the voltage $V_{ref}$ on terminal 63a of the operational amplifier 63. As a result of this the surface potential well beneath electrode 61 acquires a depth which is determined by $V_{ref}$ and

the charge $Q_i$.

Subsequently, at the time instant $t_3$, the charge $Q_i$ is removed in a manner known per se to a drain diffusion channel (not shown) by applying a clock pulse with a suitable potential to said channel.

At the time instant $t_4$ the quantity of charge $Q_{i+1}$ is brought by a subsequent clock pulse out of the column 3a to beneath the gate electrode 61, which quantity of charge is representative of the image information of the image point $i+1$ adjacent to the image point i.

At time instant $t_5$, the switch 65 is again closed by means of a clock pulse, as a result of which the surface potential well beneath the floating gate electrode acquires a depth which is determined by $V_{ref}$ and $Q_{i+1}$.

Figure 5c shows the manner in which the output voltage at terminal 66 of the charge scanning amplifier 62 depends on the surface potential beneath the floating gate electrode 61 at, respectively, the time instances $t_1$ to $t_5$ incl. It is evident from this figure that between the time instances $t_4$ and $t_5$, a voltage difference $\Delta V$ is produced which is a measure of the charge difference $\Delta Q = Q_i - Q_{i+1}$. The sign of the voltage at the time instance $t_4$ with respect to the reference voltage determines the sign of the charge change.

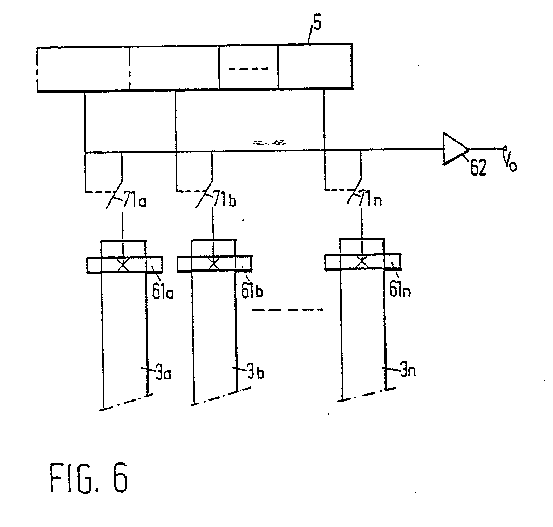

It is not necessary to provide an amplifier 62 for each TDI column 3a-3n. As a result of providing additional switches 71a-71n (Figure 6) for each floating gate electrode 61 of each of the columns 3a-3n, the columns can be scanned by means of the horizontal shift register 5, said shift register ensuring that only one of the switches 71a-71n is always closed successively.

Figure 6 shows diagrammatically an exemplary embodiment in which the same components are indicated by the same reference numerals as in, respectively, Figures 1 and 5. The switches 71a-71n are always connected by one terminal to the input of a single charge scanning amplifier 62. In the configuration according to Figure 6, the draining of the charge $Q_i$ and the clocking through of the charge $Q_{i+1}$ to beneath each of the floating gate electrodes 61a-61n can take place simultaneously in all the columns 3a-3n, while all the switches 71a-71n have been open.

## Claims

1.  Use of an image pickup device comprising:
    - a matrix of image pickup device elements
    - a means for supplying clock signals to the matrix of image pickup elements
    - means for the column-wise determination of a signal which is representative of the difference between the image information of one particular image point which is imaged on the image pickup elements of a column and the image information of the subsequent image point in said column

in detection means of a device for forming an X-ray image of a body under examination.

## Revendications

1.  Utilisation d'un dispositif de détection d'images comprenant :
    - une matrice d'éléments de détection d'images,
    - des moyens pour envoyer des signaux d'horloge à la matrice d'éléments de détection d'images,
    - des moyens de détermination, colonne par colonne, d'un signal représentatif de la différence entre l'information d'image d'un point d'image particulier, dont l'image est formée sur les éléments de détection d'images d'une colonne, et l'information d'image du point d'image suivant de ladite colonne

dans des moyens de détection d'un dispositif pour former une radiographie d'un corps à examiner.

## Ansprüche

1.  Verwendung einer Bildaufnahmevorrichtung mit:
    - einer Matrix aus Bildaufnahmevorrichtungselementen
    - Mitteln zur Zuführung von Taktsignalen zu der Matrix der Bildaufnahmeelemente
    - Mitteln zur spaltenweisen Bestimmung eines Signales, welches repräsentativ ist für den Unterschied zwischen der Bildinformation eines speziellen Bildpunktes, welcher auf den Bildaufnahmeelementen einer Spalte gespeichert ist und der Bildinformation des nachfolgenden Bildpunktes in der Spalte

bei Erfassungsmitteln einer Vorrichtung zur Ausbildung eines Roentgenstrahlenbildes eines prüfenden Körpers.

FIG. 1

FIG. 2a

FIG. 2b

FIG. 3

FIG. 4a

FIG. 4b

FIG. 4c

FIG. 5a

FIG. 5b

FIG. 5c

8

FIG. 6